(19) Europäisches Patentamt
European Patent Office
Office européen des brevets

(11) Publication number: **0 049 467**
**A1**

(12) # EUROPEAN PATENT APPLICATION

(21) Application number: 81107751.0

(22) Date of filing: 30.09.81

(51) Int. Cl.³: C 08 F 10/00
C 08 F 4/64, C 08 F 36/06

(30) Priority: 03.10.80 JP 137549/80

(43) Date of publication of application:
14.04.82 Bulletin 82/15

(84) Designated Contracting States:
BE DE FR GB IT

(71) Applicant: IDEMITSU KOSAN COMPANY LIMITED
No. 1-1, 3-chome, Marunouchi Chiyoda-ku
Tokyo(JP)

(72) Inventor: Asahi, Satoshi
No. 1720, Kamiizumi Sodegaura-machi
Kimitsu-gun Chiba-ken(JP)

(72) Inventor: Takeshita, Yasuhiro
No. 1205-139, Kamiizumi Sodegaura-machi
Kimitsu-gun Chiba-ken(JP)

(74) Representative: Türk, Dietmar, Dr. rer. nat. et al,
Redies, Redies, Türk & Gille Bruckner Strasse 20
D-4000 Düsseldorf 13(DE)

(54) **Process for polymerization of alpha-olefin.**

(57) A process for producing poly-α-olefin having stereospecific property which comprises polymerizing α-olefin by the use of a catalyst comprising (A) a reaction product of a magnesium compound and a titanium compound, (B) an organometallic compound, and (C) an electron donor compound, wherein the reaction product used as Component (A) is a solid product which is prepared by reacting a magnesium dialkoxide represented by the general formula: $Mg(OR^1)_2$ with an electron donor compound, and then reacting the product obtained two or three more times with a halogen-containing tetravalent titanium compound represented by the general formula: $Ti(OR^2)_nX^1_{4-n}$.

In accordance with the process of the present invention, polymers produced have high stereospecific property and high apparent density, and catalysts used have very high activity for the polymerization of α-olefin.

EP 0 049 467 A1

Croydon Printing Company Ltd.

# PROCESS FOR POLYMERIZATION OF α-OLEFIN

## BACKGROUND OF THE INVENTION

The present invention relates to a process for the polymerization of α-olefin and more particularly to a process for the production of highly stereospecific poly-α-olefins in a process having excellent polymerization activity, which comprises polymerizing an α-olefin in the presence of a catalyst comprising a specific activated titanium catalyst component, an organometallic compound, and an electron donor compound.

Various methods have heretofore been known as methods by which stereospecific poly-α-olefins can be produced in the presence of a catalyst comprising a solid catalyst component containing magnesium and titanium, and an organometallic compound. Examples of such methods are disclosed in Japanese Patent Publication No. 34098/1971, and Japanese Patent Application Laid-Open Nos. 98076/1977 and 2580/1978.

All of these methods, however, have various disadvantages. There has not yet been developed a method which satisfies various requirements that (i) polymers produced have high stereospecific property, high apparent density and high stability, (ii) the polymerization activity is very high, (iii) catalysts used can be easily handled, and (iv) polymers produced can be easily colored and the like. In particular, the polymerization activity of a catalyst and the stereospecific

property of the polymer product are antipodal to each other, i.e., when the polymerization activity is increased, the stereospecific property is reduced, whereas when the stereospecific property is increased, the polymerization activity is reduced. It has, therefore, been believed that it is very difficult to maintain both the polymerization activity and stereospecific property at high levels.

SUMMARY OF THE INVENTION

The principal object of the present invention is to provide a process for the production of poly-α-olefin having a high apparent density while maintaining both the polymerization activity and stereospecific property of the polymer formed at high levels.

The present invention provides a process for producing poly-α-olefin having high stereospecific property which comprises polymerizing α-olefin by the use of a catalyst comprising (A) a reaction product of a magnesium compound and a titanium compound, (B) an organometallic compound, and (C) an electron donor compound, wherein the reaction product used as Component (A) is a solid product which is prepared by reacting a magnesium dialkoxide represented by the general formula:

$$Mg(OR^1)_2$$

wherein $R^1$ contains from 1 to 20 carbon atoms, and is an alkyl group, a cycloalkyl group, an aryl group, or an aralkyl group,

with an electron donor compound, and then reacting the product obtained two or more times with a halogen-containing tetravalent titanium compound represented by the general formula:

$$Ti(OR^2)_nX^1{}_{4-n}$$

wherein $R^2$ contains from 1 to 10 carbon atoms, and is an alkyl group, a cycloalkyl group, an aryl group, an alkenyl group, or an aralkyl group, n is a real number between 0 and less than 4, and $X^1$ is a halogen atom.

DETAILED DESCRIPTION OF THE INVENTION

The magnesium dialkoxide as used herein has the general formula:

$$Mg(OR^1)_2$$

wherein $R^1$ contains from 1 to 20 carbon atoms, preferably from 1 to 10 carbon atoms, and is an alkyl group, a cycloalkyl group, an aryl group, or an aralkyl group.

Preferred examples of such magnesium dialkoxides include magnesium dimethoxide, magnesium diethoxide, magnesium dipropoxide, magnesium dibutoxide, magnesium dicyclohexoxide, and magnesium diphenoxide. Although magnesium dialkoxides commercially available can be used in the present invention, those prepared by reacting metallic magnesium with alcohols may be used.

In accordance with the present invention, the magnesium dialkoxide is reacted with the electron donor compound. These electron donor compounds are usually organic compounds

containing oxygen, nitrogen, phosphorus, or sulfur. Examples of such electron donor compounds include amines, amides, ketones, nitriles, phosphines, phosphoamides, esters, thioethers, thioesters, acid anhydrides, acid halides, aldehydes, and organic acids, and in further detail, organic acids such as aromatic carboxylic acids, e.g., benzoic acid and p-oxybenzoic acid; acid anhydrides such as succinic anhydride, benzoic anhydride, and p-toluylic anhydride; ketones containing from 3 to 15 carbon atoms, such as acetone, methyl ethyl ketone, methyl isobutyl ketone, acetophenone, benzophenone, and benzoquinone; aldehydes containing from 2 to 15 carbon atoms, such as acetaldehyde, propionaldehyde, octylaldehyde, benzaldehyde, tolualdehyde, and naphthoaldehyde; esters containing from 2 to 18 carbon atoms, such as methyl formate, methyl acetate, ethyl acetate, vinyl acetate, propionyl acetate, octyl acetate, cyclohexyl acetate, ethyl propionate, methyl butyrate, ethyl valerate, methyl chloroacetate, ethyl dichloroacetate, methyl methacrylate, ethyl crotonate, ethyl pivalate, dimethyl maleate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluylate, ethyl toluylate, amyl toluylate, ethyl ethylbenzoate, methyl anisate, ethyl ethoxybenzoate, ethyl p-butoxybenzoate, ethyl o-chlorobenzoate, ethyl naphthoate, γ-butylolactone, δ-valerolactone, cumarine, phthalide, and ethylene carbonate; acid halides containing from 2 to 15

carbon atoms, such as acetyl chloride, benzyl chloride, toluyl chloride, and anisil chloride; ethers containing from 2 to 20 carbon atoms, such as methyl ether, ethyl ether, isopropyl ether, n-butyl ether, amyl ether, tetrahydrofuran, anisole, diphenyl ether, and ethylene glycol butyl ether; acidamides such as acetic amide, benzoic amide, and toluic amide; amines such as tributylamine, N,N'-dimethylpiperadine, tribenzylamine, aniline, pyridine, picoline, and tetramethylethylenediamine; nitriles such as acetonitrile, benzonitrile, and tolunitrile; and tetramethyl urea, nitrobenzene and lithium butyrate.

Of these compounds, esters, ethers, ketones, acid anhydrides, and the like are preferred. In particular, alkyl esters of aromatic carboxylic acids, for example, alkyl (containing from 1 to 4 carbon atoms) esters of aromatic carboxylic acids such as benzoic acid, p-methoxybenzoic acid, p-ethoxybenzoic acid, and toluic acid are preferred. In addition, aromatic ketones, such as benzoquinone, aromatic carboxylic anhydrides, such as benzoic anhydride, and ethers, such as ethylene glycol butyl ether, and the like are preferred.

There are no special limitations to the conditions under which the magnesium dialkoxide is reacted with the electron donor compound, and they can be determined appropriately according to various circumstances. Usually, the electron donor compound is added to the magnesium dialkoxide in an amount of from 0.01 to 10 moles, preferably from 0.05 to 5 moles, per mole of the magnesium dialkoxide, and they are reacted at a temperature of 0 to 200°C for 5 minutes to 10 hours, and

preferably at a temperature of 30 to 150°C for 30 minutes to 3 hours. To this reaction system, inert hydrocarbons such as pentane, hexane, heptane and octane can be added as solvents.

The thus prepared reaction product is reacted with the halogen-containing tetravalent titanium compound. The halogen-containing tetravalent titanium compound has the general formula:

$$Ti(OR^2)_nX^1{}_{4-n}$$

wherein $R^2$ contains from 1 to 10 carbon atoms, preferably from 1 to 6 carbon atoms, and is an alkyl group, a cycloalkyl group, an aryl group, an alkenyl group, or an aralkyl group, $X^1$ is a halogen atom, such as a chlorine atom, a bromine atom, and iodine atom, and n is usually an integer of 0, 1, 2 or 3, but may not always be an integer and is sufficient to be a real number within the range of $0 \leq n < 4$ as an average value of a mixture of various titanium compounds.

Examples of such halogen-containing tetravalent titanium compounds include titanium tetrahalides, such as $TiCl_4$, $TiBr_4$ and $TiI_4$, titanium alkoxy trihalides, such as $Ti(OCH_3)Cl_3$, $Ti(OC_2H_5)Cl_3$, $Ti(O{\cdot}n{-}C_4H_9)Cl_3$ and $Ti(OC_2H_5)Br_3$, titanium alkoxy dihalides, such as $Ti(OCH_3)_2Cl_2$, $Ti(OC_2H_5)_2Cl_2$, $Ti(O{\cdot}n{-}C_4H_9)_2Cl_2$ and $Ti(OC_2H_5)_2Br_2$, and titanium trialkoxy monohalides, such as $Ti(OCH_3)_3Cl$, $Ti(OC_2H_5)_3Cl$, $Ti(O{\cdot}n{-}C_4H_9)_3Cl$ and $Ti(OC_2H_5)_3Br$. These compounds may be used alone or in combination with each other. Of these compounds, high halogen-containing compounds are preferred and in particular, titanium tetrachloride ($TiCl_4$) is preferred.

There are no special limitations to the conditions under which the reaction product obtained by the above reaction and the halogen-containing tetravalent titanium compound are reacted. Usually, the halogen-containing tetravalent titanium compound is added in an amount of 1 to 50 moles, preferably 2 to 20 moles, per mole of the magnesium contained in the reaction product, and they are reacted at 0 to 200°C for 5 minutes to 10 hours and preferably at 30 to 150°C for 30 minutes to 5 hours. In this reaction, if necessary, an inert solvent such as pentane, hexane and heptane can be used.

In the process of the present invention, it is necessary to repeat the foregoing reaction using the halogen-containing tetravalent titanium compound two or more times. When the reaction is performed just once, the property of the catalyst obtained is not improved to the extent that is satisfactory. In more detail, after the first reaction between the reaction product prepared by the reaction with the electron donor compound and the halogen-containing tetravalent titanium compound is completed, the reaction solution is separated at a temperature of 0 to 200°C, preferably 30 to 150°C to obtain a reaction product, and the thus obtained reaction product is then, if necessary, after being washed with an inert solvent, such as heptane, reacted with the halogen-containing tetravalent titanium compound under the same conditions as above.

After the reaction with the halogen-containing tetravalent titanium compound is repeated, the resulting

reaction product is fully washed with an inert solvent to provide a solid product.

The thus obtained solid product is used in the invention as Component (A) of the catalyst for the polymerization of α-olefin (this is referred to as "solid catalyst component").

In accordance with the process of the present invention, the polymerization of α-olefin is carried out by the use of a catalyst comprising Component (A) of the solid product as prepared above, Component (B) of the organometallic compound, and Component (C) of the electron donor compound.

In the polymerization of α-olefin, a dispersion of the solid product as Component (A), an organometallic compound as Component (B), and an electron donor compound as Component (C) are added to a reaction system, and α-olefin is then introduced into the reaction system.

The polymerization method, polymerization conditions, and so forth are not critical in the process of the present invention. Any of a solution polymerization, a suspension polymerization, a gas phase polymerization, and so on can be used. The polymerization may be carried out continuously or discontinuously.

The amounts of the catalyst components being added to the reaction system are hereinafter described with reference to solution polymerization or suspension polymerization.

The amount of Component (A) calculated as a titanium atom is from 0.001 to 1.0 millimoles per liter, preferably

from 0.005 to 0.5 millimoles per liter. Component (B) is added in an amount of from 1 to 1,000 moles, preferably from 10 to 500 moles, per mole of the titanium atom in Component (A). Component (C) is added in an amount of from 0.01 to 200 moles, preferably from 0.1 to 100 moles, per mole of the titanium atom in Component (A).

The pressure of α-olefin in the polymerization system is preferably from atomospheric pressure to 50 $kg/cm^2$. The polymerization temperature is from 30 to 200°C and preferably from 50 to 150°C. The molecular weight of the polymer product during the polymerization can be adjusted by the known techniques, such as introduction of hydrogen. The polymerization time is appropriately determined within the range of from 10 minutes to 10 hours, preferably from 30 minutes to 5 hours.

Any organometallic compound can be used as Component (B) of the catalyst for use in the process of the present invention. Examples of metals which are contained in the organometallic compounds include Groups 1 to 3 metals of the Periodic Table, such as lithium, sodium, potassium, zinc, cadmium, and aluminum. Of these metals, aluminum is particularly preferred.

Examples of organometallic compounds which can be used include alkyllithium, such as methyllithium, ethyllithium, propyllithium, and butyllithium, and dialkylzinc, such as dimethylzinc, diethylzinc, dipropylzinc, and dibutylzinc. In addition, organoaluminum compounds which can be used

are those compounds represented by the general formula:

$$AlR^4_m X^2_{3-m}$$

wherein $R^4$ contains from 1 to 10 carbon atoms and is an alkyl group, a cycloalkyl group, or an aryl group, m is a real number between 1 and 3, and $X^2$ is a halogen atom, such as chlorine and bromine. Suitable examples of such organoaluminum compounds include trialkylaluminum compounds, such as trimethylaluminum, triethylaluminum, triisobutylaluminum, triisobutylaluminum, and trioctylaluminum, and dialkylaluminum monohalide, such as diethylaluminum monochloride, diisopropylaluminum monochloride, diisobutylaluminum monochloride, and dioctylaluminum monochloride. In addition, mixtures of these organoaluminum compounds can be used preferably.

As the electron donor compound of Component (C) for use in the catalyst of the present invention, the same electron donor compound as used in the preparation of Component (A) can be used. The electron donor compound used as Component (C) may be either the same compound as used in the preparation of Component (A), or a compound which is different therefrom.

Alpha-olefins which can be polymerized by the process of the present invention are usually those compounds represented by the general formula:

$$R^3\text{-}CH{=}CH_2$$

wherein $R^3$ is hydrogen, or an alkyl or cycloalkyl group containing from 1 to 20 carbon atoms. Examples of α-olefins

include straight monoolefins such as ethylene, propylene, butene-1, hexene-1, and octene-1, branched monoolefins such as 4-methyl-pentene-1, and dienes such as butadiene. The process of the present invention can be effectively utilized for homo-polymerization or co-polymerization of such α-olefins.

In the process of the present invention, the catalyst used has very high activity, and furthermore, the polymer produced has high stereospecific property and therefore the value of the polymer product is very high.

The process of the present invention is a high active polymerization method and at the same time, provides a polymer having a high stereospecific property. Therefore, a step of removing the catalyst and a step of extracting amorphous polymers can be simplified or omitted. Accordingly, the polymerization can be carried out very efficiently.

The present invention will hereinafter be explained in greater detail with reference to the following examples. In these examples, all procedures were performed in an argon atmosphere. The catalyst activity, isotactic index (I.I.), and total isotactic index (total I.I.) are defined as follows:

Catalyst Activity: Total weight (kilograms) of polymers produced per gram of a titanium atom by polymerization under the conditions of 70°C, 2 hours and a propylene partial pressure of 7 $kg/cm^2$.

$$I.I. = \frac{\text{Weight of boiling n-heptane-insoluble polymers of polymers insoluble in polymerization solvent during polymerization}}{\text{Weight of polymers insoluble in polymerization solvent during polymerization}} \times 100\ (\%)$$

$$\text{Total I.I.} = \frac{\text{weight of boiling n-heptane-insoluble polymers of polymers insoluble in polymerization solvent during polymerization}}{\text{Weight of all polymers formed during polymerization}} \times 100\ (\%)$$

Example 1

(1) Preparation of Solid Catalyst Component

A fully dried 500 milliliter-four necked flask was charged with 150 milliliters of dried n-heptane, 10.0 grams (88 millimoles) of magnesium diethoxide, and 2.64 grams (17.6 millimoles) of ethyl benzoate, which were then reacted under reflux for 1 hours. Subsequently, the temperature of the reaction mixture was adjusted to 70°C, and 83 grams (440 millimoles) of titanium tetrachloride was dropwise added thereto over a period of 30 minutes. The resulting mixture was reacted under reflux for additional 3 hours. Thereafter, the temperature of the reaction mixture was adjusted to 80°C, and a supernatant liquid was withdrawn therefrom. Then, 250 milliliters of n-heptane was added to the residue, the resulting mixture was stirred and allowed to stand, and the supernatant liquid was withdrawn. This procedure was repeated twice to wash the residue. Thereafter, 150 milliliters of n-heptane was added thereto, and the temperature of the resulting mixture

was adjusted to 70°C. Then, 83 grams (440 millimoles) of titanium tetrachloride was dropwise added over a period of 30 minutes, and the resulting mixture was reacted under reflux for 3 hours. Then, the temperature of the reaction mixture was adjusted to 80°C, and the supernatant liquid was withdrawn. The residue was washed by adding 250 milliliters of n-heptane. This washing was repeated until no chlorine ion was detected. A solid catalyst component was thus obtained. The amount of titanium supported in the solid catalyst component was measured by a colorimeter and was found to be 26 milligrams per gram of the support (mg-Ti/g-support).

(2) Polymerization of Propylene

A mixture of 400 milliliters of dried n-heptane, 2 millimoles of triethylaluminum (TEA), 0.5 millimole of methyl p-toluylate, and 0.02 millimoles as titanium of the solid catalyst component as prepared above was placed in a 1 liter-stainless steel autoclave, and the temperature thereof was raised to 70°C. Subsequently, propylene was continuously introduced into the autoclave while at the same time introducing 0.2 kilogram per square centimeters of hydrogen, and was polymerized for 2 hours while maintaining the total pressure at 7 kilograms per square centimeters gause ($kg/cm^2$-G). Unreacted monomers were purged and 221 grams of an insoluble polymer was obtained. The I.I. of the polymer was 96%, and the apparent density was 0.38 gram per milliliter (g/cc). The amount of a soluble polymer was 10.5 grams. Thus, the total I.I. was 92%.

Comparative Example 1

(1) Preparation of Solid Catalyst Component

A solid catalyst component was prepared in the same manner as in Example 1 with the exception that after the first reaction with titanium tetrachloride, the reaction product was immediately washed with n-heptane until no chlorine ion was detected without performing the second reaction with titanium tetrachloride. The amount of titanium supported in the solid catalyst component was 54 milligrams per gram of the support (mg-Ti/g-support).

(2) Polymerization of Propylene

Propylene was polymerized in the same manner as in Example 1 with the exception that the solid catalyst component as prepared above was used. As a result, 156 grams of an insoluble polymer was obtained. The I.I. of the insoluble polymer was 86%, and the apparent density was 0.33 gram per milliliter (g/cc). In addition, 6.1 grams of a soluble polymer was obtained.

Comparative Example 2

(1) Preparation of Solid Catalyst Component

A solid catalyst component was prepared in the same manner as in Example 1 with the exception that a two-fold amount (166 grams) of titanium tetrachloride was reacted at one time. The amount of titanium supported in the solid catalyst component was 42 milligrams per gram of support (mg-Ti/g-support).

(2) Polymerization of Propylene

Propylene was polymerized in the same manner as in Example 1 with the exception that the solid catalyst component as prepared above was used. As a result, 108 grams of an insoluble polymer was obtained, and the insoluble polymer had an I.I. of 96% and an apparent density of 0.37 gram per milliliter (g/cc).

Example 2

Propylene was polymerized in the same manner as in Example 1 with the exception that 0.8 millimoles of methyl p-toluylate was used. As a result, 187 grams of an insoluble polymer and 3.6 grams of a soluble polymer were obtained. The insoluble polymer had an I.I. of 97% and an apparent density of 0.39 grams per milliliter (g/cc).

Examples 3 to 8

(1) Preparation of Solid Catalyst Component

. A series of solid catalyst components were prepared in the same manner as in Example 1 with the exception that the amounts of ethyl benzoate and titanium tetrachloride being added were changed. The results are shown in Table 1.

Table 1

| Example No. | Ethyl Benzoate Amount (millimoles) | Ethyl Benzoate Addition Ratio* | Amount of Titanium Tetrachloride (millimoles) 1st time | Amount of Titanium Tetrachloride (millimoles) 2nd time | Amount of Titanium supported (mg-Ti/g-support) |
|---|---|---|---|---|---|
| 3 | 8.8 | 1/10 | 440 | 440 | 24 |
| 4 | 35.2 | 2/5 | 440 | 440 | 23 |
| 5 | 44.0 | 1/2 | 440 | 440 | 25 |
| 6 | 88 | 1.0 | 440 | 440 | 28 |
| 7 | 17.6 | 1/5 | 880 | 880 | 25 |
| 8 | 17.6 | 1/5 | 220 | 440 | 27 |

*Amount (moles) of ethyl benzoate per mole of magnesium diethoxide

(2) Polymerization of Propylene

Propylene was polymerized in the same manner as in Example 1 with the exception that the solid catalytic component as prepared in the above (1) was used. The results are shown in Table 2.

Table 2

| Example No. | Amount of Insoluble Polymer (grams) | Amount of Soluble Polymer (grams) | I.I. (%) | Apparent Density (grams per milliliter (g/cc) ) |
|---|---|---|---|---|
| 3 | 230 | 12.3 | 96 | 0.35 |
| 4 | 211 | 11.2 | 95 | 0.36 |
| 5 | 197 | 10.8 | 95 | 0.36 |
| 6 | 178 | 9.2 | 95 | 0.35 |
| 7 | 218 | 10.3 | 96 | 0.38 |
| 8 | 226 | 13.1 | 96 | 0.37 |

Example 9

(1) Preparation of Solid Catalyst Component

A 500 milliliter-four necked flask was charged with 150 milliliters of dried n-heptane, 10.0 grams (88 millimoles) of magnesium diethoxide, and 2.64 grams (17.6 millimoles) of ethyl benzoate, which were then reacted under reflux for 1 hour. Subsequently, the temperature of the reaction mixture was lowered to 70°C, and 184 grams (880 millimoles) of diethoxytitanium dichloride ($Ti(OC_2H_5)_2Cl_2$) was added thereto. The resulting mixture was reacted under reflux for 3 hours. Thereafter, the temperature of the reaction mixture was increased to 80°C, and the supernatant liquid was withdrawn. Then, 250 milliliters of n-heptane was added, and furthermore, 83 grams (440 millimoles) of titanium tetrachloride was added. The resulting mixture was heated up and reacted under reflux for 3 hours. The supernatant liquid was withdrawn at 80°C, and 250 milliliters of n-heptane was added to effect washing. This procedure was repeated until no chlorine atom was detected. Thus, a catalyst slurry was obtained. The amount of titanium supported in the solid catalyst component was 32 milligrams per gram of the support (mg-Ti/g-support).

(2) Polymerization of Propylene

Propylene was polymerized in the same manner as in Example 1 with the exception that the solid catalyst component as prepared above was used. As a result, 143 grams of an insoluble polymer and 15.7 grams of a soluble polymer were

obtained. The insoluble polymer had an I.I. of 92% and an apparent density of 0.33 gram per milliliter (g/cc).

WHAT IS CLAIMED IS:

1. A process for producing poly-α-olefin having stereospecific property which comprises polymerizing α-olefin by the use of a catalyst comprising (A) a reaction product of a magnesium compound and a titanium compound, (B) an organometallic compound, and (C) an electron donor compound, wherein the reaction product used as Component (A) is a solid product which is prepared by reacting a magnesium dialkoxide represented by the general formula: $Mg(OR^1)_2$ (wherein $R^1$ contains from 1 to 20 carbon atoms and is an alkyl group, a cycloalkyl group, an aryl group, or an aralkyl group) with an electron donor compound, and then reacting the product obtained two or more times with a halogen-containing tetravalent titanium compound represented by the general formula: $Ti(OR^2)_nX^1{}_{4-n}$ (wherein $R^2$ contains from 1 to 10 carbon atoms, and is an alkyl group, a cycloalkyl group, an aryl group, an alkenyl group, or an aralkyl group, n is a real number between 0 and less than 4, and $X^1$ is a halogen atom).

2. The process as claimed in Claim 1, wherein the magnesium dialkoxide represented by the general formula: $Mg(OR^1)_2$ is magnesium dimethoxide, magnesium diethoxide, magnesium dipropoxide, magnesium dibutoxide, magnesium dichlorohexoxide, or magnesium dibenzoxide.

3. The process as claimed in Claim 1, wherein the electron donor compound is an organic compound containing

oxygen, nitrogen, phosphorus or sulfur.

4. The process as claimed in Claim 1, wherein the organometallic compound is an organic compound containing lithium, sodium, potassium, zinc, cadmium or aluminum.

5. The process as claimed in Claim 1, wherein the α-olefin is represented by the general formula: $R^3-CH=CH_2$ (wherein $R^3$ is hydrogen, or an alkyl or cycloalkyl group containing from 1 to 20 carbon atoms).

0049467

European Patent Office

# EUROPEAN SEARCH REPORT

Application number

EP 81 10 7751

| Category | DOCUMENTS CONSIDERED TO BE RELEVANT<br>Citation of document with indication, where appropriate, of relevant passages | Relevant to claim | CLASSIFICATION OF THE APPLICATION (Int. Cl. 3) |
|---|---|---|---|
| X | EP - A - 0 002 221 (HOECHST) | | C 08 F 10/00<br>4/64<br>36/06 |
| | * claims 1-6; page 3, lines 31-33; page 5, lines 27-39; page 6, lines 11-17; page 7, line 12 - page 8, line 36 * | 1,2,4<br>5 | |
| Y | * claims 1-6; page 3, lines 31-33; page 5, lines 27-39; page 6, lines 11-17; page 7, line 12 - page 8, line 36 * | 1,3 | |
| P | & US - A - 4 239 650 | | |
| | -- | | TECHNICAL FIELDS SEARCHED (Int.Cl. 3) |
| Y | GB - A - 1 554 340 (MITSUI) | | C 08 F 10/00-<br>10/14<br>110/00-<br>110/14<br>210/00-<br>210/18<br>4/64<br>4/62<br>36/06 |
| | * claims 1-4; page 3, line 13 - page 4, line 16 * | 1,3 | |
| D | & JP - A - 78 002 588 | | |
| | -- | | |
| A | GB - A - 1 321 766 (SOLVAY) | | |
| | * claims 1,3,5,7-10,13,15,18; page 2, lines 1-5; lines 42-60; page 2, line 123 - page 3, line 17; page 3, lines 106-122 * | 1,2,<br>4,5 | |
| | ----- | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

✓ The present search report has been drawn up for all claims

| Place of search | Date of completion of the search | Examiner |
|---|---|---|
| The Hague | 22-01-1982 | WEBER |